(19) Europäisches Patentamt / European Patent Office / Office européen des brevets

(11) **EP 2 392 701 A1**

(12) **EUROPEAN PATENT APPLICATION**
published in accordance with Art. 153(4) EPC

(43) Date of publication:
**07.12.2011 Bulletin 2011/49**

(21) Application number: **10735837.6**

(22) Date of filing: **27.01.2010**

(51) Int Cl.:
**D01F 9/145** (2006.01)　　**D04H 3/00** (2006.01)
**D04H 3/16** (2006.01)

(86) International application number:
**PCT/JP2010/051048**

(87) International publication number:
**WO 2010/087371 (05.08.2010 Gazette 2010/31)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.01.2009　JP 2009019642**
**30.01.2009　JP 2009019643**

(71) Applicant: **Teijin Limited**
**Osaka-shi, Osaka 541-0054 (JP)**

(72) Inventors:
• **SAKURAI, Hiroshi**
**Iwakuni-shi**
**Yamaguchi 740-0014 (JP)**

• **SANO, Hiroki**
**Iwakuni-shi**
**Yamaguchi 740-0014 (JP)**
• **HARA, Hiroshi**
**Iwakuni-shi**
**Yamaguchi 740-0014 (JP)**
• **TAKAGI, Shoichi**
**Iwakuni-shi**
**Yamaguchi 740-0014 (JP)**

(74) Representative: **Hallybone, Huw George**
**Carpmaels & Ransford**
**One Southampton Row**
**London**
**WC1B 5HA (GB)**

(54) **GRAPHITIZED SHORT FIBERS AND COMPOSITION THEREOF**

(57)　Pitch-based graphitized short fibers formed from mesophase pitch as a raw material, having an average fiber diameter of 5 to 20 $\mu$m, a percentage (CV value) of a variance of a fiber diameter with respect to the average fiber diameter of 8 to 15%, a number average fiber length of 20 to 500 $\mu$m, and a crystallite size (La) derived from a growth direction of a hexagonal net plane of 30 nm or more, having graphene sheets that are closed upon observation of an end surface of a filler with a transmission electron microscope, and a substantially flat surface observed with a scanning electron microscope, and having an R value, which is a relative intensity ratio ($I_D/I_G$) of an intensity ($I_D$) of a Raman band in the vicinity of 1,360 cm$^{-1}$ to an intensity ($I_G$) of a Raman band in the vicinity of 1,580 cm$^{-1}$ measured by laser Raman spectroscopy, in a range of 0.01 to 0.07. The short fibers can be filled in a rubber composition at a high density without inhibition of curing of the rubber composition.

[Fig. 1]

**Description**

Technical Field

The present invention relates to pitch-based graphitized short fibers. The pitch-based graphitized short fibers of the invention are excellent is crystallinity on the surface and are favorably used as a heat conductive filler and a reinforcing agent for resins and rubber. In particular, the pitch-based graphitized short fibers of the invention do not impair curing of rubber upon producing a composition with the graphitized short fibers and the rubber component, thereby providing a rubber composition having the graphitized short fibers densely filled therein.

Background Art

Carbon fibers have a higher thermal conductivity than other synthetic polymers. In purposes aiming at thermal management, however, further enhancement of the thermal conductivity of carbon fibers are being demanded. Commercially available PAN-based carbon fibers generally have a thermal conductivity lower than 200 W/(m·K). This is because the PAN-based carbon fibers are so-called non-graphitizable carbon fibers, and it is considerably difficult to enhance the growth of graphite crystals, which exert the thermal conduction. On the other hand, pitch-based carbon fibers, which are produced from mesophase pitch as a raw material, are liable to form larger graphite crystals and to exert a large thermal conductivity, as compared to PAN-based carbon fibers. Accordingly, pitch-based carbon fibers, which are produced from mesophase pitch as a raw material, are expected as a high thermal conductive filler.

However, it is considerably difficult to produce a thermal conductive member with carbon fibers solely, and it is the mainstream that the carbon fibers are formed into a composite material with a matrix, thereby forming a resin composition similar to a metal filler. A molded article to be used for thermal management is used in such manners that the article is attached to a surface of a heating member or inserted between a heating member and a radiating member. Accordingly, the molded article is demanded to have flexibility, by which the molded article can be deformed to follow the surface shape of the heating member. For example, Patent Document 1 proposes a rubber composition filled with carbon fibers having a particular size distribution, preferably gas phase grown carbon fibers. However, gas phase grown carbon fibers largely increases the viscosity upon mixing with rubber, and are difficult to be filled at a high density. For enhancing a thermal conductivity of a composition, it is necessary to fill a thermal conductive filler at a high density, and it is demanded to provide a thermal conductive rubber composition that exhibits a higher thermal conductivity. A rubber composition is cured by adding a vulcanizing agent, a vulcanization accelerator and the like to rubber, and ordinary carbon fibers to be filled in rubber at a high density inhibit progress of curing reaction of the rubber, which prevents the carbon fibers from being filled at a high density. Accordingly, it is demanded to develop carbon fibers that do not impair curing of a rubber composition.

Related Art Document

Patent Document

Patent Document 1: JP-A-2006-298946

Summary of the Invention

Problems to be solved by the Invention

Ordinary carbon fibers to be filled in rubber at a high density inhibit progress of curing reaction of the rubber, and therefore, the carbon fibers are difficult to be filled at a high density. An object of the invention is to provide carbon fibers that do not impair curing reaction of a rubber composition and are capable of being filled at a high density. Another object of the invention is to provide carbon fibers that are enhanced in mechanical strength and are capable of being used as an excellent resin reinforcing material. Still another object of the invention is to provide a thermal conductive rubber composition that exhibits a high thermal conductivity and flexibility, and in particular to provide a thermal conductive rubber composition having carbon fibers filled therein at a high density.

Means for solving the Problems

It has been found that pitch-based graphitized short fibers that have the particular shape and surface structure do not impair curing upon forming a composition with rubber, and the pitch-based graphitized short fibers can be filled in rubber at a high density, and thus the invention has been completed.

The invention relates to pitch-based graphitized short fibers formed from mesophase pitch as a raw material, having an average fiber diameter of 5 to 20 μm, a percentage (CV value) of a variance of a fiber diameter with respect to the average fiber diameter of 8 to 15%, a number average fiber length of 20 to 500 μm, and a crystallite size (La) derived from a growth direction of a hexagonal net plane of 30 nm or more, having graphene sheets that are closed upon observation of an end surface of a filler with a transmission electron microscope, and a substantially flat surface observed with a scanning electron microscope, and having an R value, which is a relative intensity ratio ($I_D/I_G$) of an intensity ($I_D$) of a Raman band in the vicinity of 1,360 cm$^{-1}$ to an intensity ($I_G$) of a Raman band in the vicinity of 1,580 cm$^{-1}$ measured by laser Raman spectroscopy, in a range of 0.01 to 0.07. The invention includes the pitch-based graphitized short fibers that have a $\Delta\nu_G$ value, which is a half value width of a Raman band in the vicinity of 1,580 cm$^{-1}$ measured by laser Raman spectroscopy, of less than 20 (cm$^{-1}$). The use of the pitch-based graphitized short fibers of the invention provides a thermal conductive composition having carbon fibers filled at a high density and provides a molded article that has a high thermal conductivity and flexibility.

The pitch-based graphitized short fibers of the invention may be preferably produced by (1) a step of producing a pitch-based carbon fiber precursor web from mesophase pitch by a melt-blowing method, (2) a step of producing a pitch-based infusible fiber web having an oxygen attached amount of 6.0 to 7.5% by weight by infusiblizing the pitch-based carbon fiber precursor web in an oxidizing gas atmosphere, (3) a step of producing a pitch-based carbon fiber web by baking the infusible fiber web at 600 to 2,000°C, (4) a step of producing pitch-based short carbon fibers by pulverizing the pitch-based carbon fiber web, and (5) a step of baking the pitch-based short carbon fibers at 2,300 to 3,400°C.

Advantages of the Invention

The pitch-based graphitized short fibers of the invention do not impair curing of a rubber composition, and accordingly, the pitch-based graphitized short fibers can be filled in a rubber composition at a high density, thereby providing a thermal conductive rubber composition that has a higher thermal conductivity than an ordinary thermal conductive rubber composition. The use of the pitch-based graphitized short fibers of the invention can provide a thermal conductive composition that is excellent in mechanical strength, and the pitch-based graphitized short fibers of the invention provide a thermal conductive molded article and a thermal conductive sheet that exhibit a high thermal conductivity and flexibility.

Brief Description of the Drawing

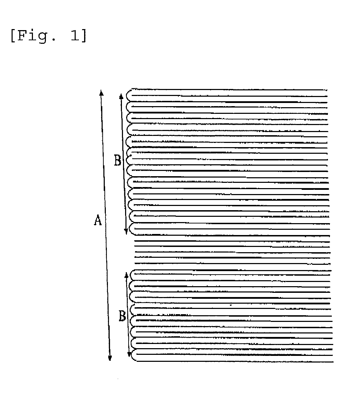

[Fig. 1] The figure is a schematic view showing ends of pitch-based graphitized short fibers.

Embodiments for carrying out the Invention

Embodiments of the invention will be described below.

[Pitch-based Graphitized Short Fibers]

The pitch-based graphitized short fibers of the invention have the particular shape and have an R value measured by laser Raman spectroscopy in a range of 0.01 to 0.07. The R value designates a relative intensity ratio ($I_D/I_G$) of an intensity ($I_D$) of an Raman band in the vicinity of 1,360 cm$^{-1}$ to an intensity ($I_G$) of the Raman band in the vicinity of 1, 580 cm$^{-1}$.

In the case of a specimen having strong absorption, such as a carbon material, the measurement depth of a Raman spectrum is determined by the penetration depth of laser light used as the light source and the self-absorption of Raman scattering light. The measurement depth of a carbon material is generally several hundred angstrom, and thus the laser Raman spectroscopy can be considered substantially as surface analysis. The use of a laser Raman microprobe (i.e., a Raman microspectroscope) combining a laser Raman spectroscope and an optical microscope enables evaluation of a minute portion corresponding to the optical micrograph with a spatial resolution of 1 μm. Accordingly, a side wall portion of carbon fibers can be analyzed. The R value, which is the relative intensity ratio ($I_D/I_G$) of the intensity ($I_D$) of the Raman band in the vicinity of 1,360 cm$^{-1}$ to the intensity ($I_G$) of the Raman band in the vicinity of 1, 580 cm$^{-1}$, correlates with the crystal structure of graphite, and the lower the crystal structure is, the larger the R value is. The pitch-based graphitized short fibers having an R value in a range of 0.01 to 0.07 on the surface of the fibers provide pitch-based graphitized short fibers that do not impair curing upon forming a thermal conductive composition with a rubber component. The R value is more preferably in a range of 0.01 to 0.05. Although the correlation between the R value measured by a laser Raman spectroscopy in a range of 0.01 to 0.07 and the prevention of inhibition on curing a composition with a rubber component is not entirely clear, it is considered that an R value outside the range of 0.01 to 0.07 may cause turbulence of the structure or formation of a low crystallinity component on the surface of the pitch-based graphitized short fibers that is in direct contact with the rubber component, and in this case, it is expected that a component that poisons the catalyst component contained in the vulcanization accelerator is eluted from the surface of the pitch-based graphitized short fibers and inhibits the vulcanization. Accordingly, when the pitch-based graphitized short fibers have a high crystallinity, i.e., an R value of 0.01 to 0.07, it is expected that the component that poisons the catalyst component contained in the vulcanization accelerator is prevented from being eluted, and the curing time of the composition containing the same becomes close to the curing time of the rubber component.

The pitch-based graphitized short fibers of the invention preferably have a $\Delta v_G$ value of less than 20 (cm$^{-1}$). The $\Delta v_G$ value designates the half value width of the Raman band in the vicinity of 1,580 cm$^{-1}$. The Raman band in the vicinity of 1,580 cm$^{-1}$ is attributed to the stretching vibration mode of the C=C bond of graphite, and the higher the crystallinity is, the smaller the $\Delta v_G$ value is. In the case where the $\Delta v_G$ value is 20 (cm$^{-1}$) or more, the curing time of the composition with rubber tends to be prolonged. Graphite has a $\Delta v_G$ value of 15 (cm$^{-1}$), which is substantially the lower limit. It can be considered that the closer the $\Delta v_G$ value is to 15 (cm$^{-1}$), the higher the graphitizability is, but it is considerably difficult to produce artificially carbon fibers that have such a higher graphitization degree. In the invention, when the $\Delta v_G$ value is close to 15 (cm$^{-1}$), the crystallinity is high, and the curing time of the composition with a rubber is closer to the curing time of the rubber component. The $\Delta v_G$ value measured by laser Raman spectroscopy is preferably 19 (cm$^{-1}$) or less, and more preferably 18 (cm$^{-1}$) or less.

The pitch-based graphitized short fibers of the invention have an R value, which is a relative intensity ratio ($I_D/I_G$) of an intensity ($I_D$) of a Raman band in the vicinity of 1,360 cm$^{-1}$ to an intensity ($I_G$) of a Raman band in the vicinity of 1,580 cm$^{-1}$ measured by laser Raman spectroscopy, in a range of 0.01 to 0.07, and have high graphitizability. Accordingly, the pitch-based graphitized short fibers have a modulus that is higher than the ordinary carbon fibers, and thus, upon forming a thermal conductive composition by kneading with a matrix, can enhance the mechanical strength of the thermal conductive composition. In particular, the pitch-based graphitized short fibers of the invention do not impair curing of rubber, and thus the carbon fibers can be filled at a high density to the rubber component. Accordingly, a rubber composition that is excellent in mechanical strength as compared to the ordinary products can be provided. The rubber composition will be described in detail later.

The pitch-based graphitized short fibers of the invention have the particular shape and thus are excellent in exhibition of moldability and thermal conductivity after filling.

The pitch-based graphitized short fibers of the invention have an average fiber diameter (D1) of 5 to 20 $\mu$m observed with an optical microscope. When the D1 value is lower than 5 $\mu$m, the number of short fibers upon forming a composite material with a resin is increased to increase the viscosity of the mixture of the resin and the short fibers, which makes molding difficult. When the D1 value exceeds 20 $\mu$m, on the other hand, the number of short fibers upon forming a composite material with a resin is decreased to prevent the short fibers from being in contact with each other, which inhibits effective exhibition of thermal conductivity of the composite material. The D1 value is preferably in a range of 6 to 15 $\mu$m, and more preferably 7 to 13 $\mu$m.

The pitch-based graphitized short fibers of the invention have a percentage (CV value) of the variance of the fiber diameter (S1) observed with an optical microscope with respect to the average fiber diameter (D1) of 8 to 15%. The CV value is an index of fluctuation of the fiber diameter, and a smaller value means high process stability and a small fluctuation of products. When the CV value is less than 8%, the fiber diameter is extremely uniform, and thereby the amount of small fibers having a small size that intervene among the pitch-based graphitized short fibers is decreased to inhibit formation of the dense filled state upon forming a composite material with a resin, which prevents a composite material having high performance from being obtained. In the case where the CV value exceeds 15%, on the other hand, the dispersibility upon forming a composite material with a resin is deteriorated, which prevents a composite material having uniform capability from being obtained. The CV value is preferably 9 to 13%.

Pitch-based graphitized short fibers generally include milled fibers having an average fiber length of less than 1 mm and cut fibers having an average fiber length of 1 mm or more and less than 10 mm. Milled fibers have a powder appearance and are excellent in dispersibility, and cut fibers have an appearance close to fibers and are liable to cause contact among the fibers.

The pitch-based graphitized short fibers of the invention correspond to milled fibers and have a number average fiber length (L1) of 20 to 500 $\mu$m. The average fiber length herein is the number average fiber length, which can be obtained in such a manner that a prescribed number of the fibers are measured for fiber length with plural view fields by using a length measurement device under an optical microscope, and an average value of the measured length is obtained. In the case where the L1 value is less than 20 $\mu$m, the short fibers are inhibited from being in contact with each other, and effective thermal conduction may not be expected. In the case where the value exceeds 500 $\mu$m, on

the other hand, the viscosity of the mixture of the matrix and the short fibers is increased upon mixing with the resin, and the moldability tends to be deteriorated. The value is more preferably in a range of 20 to 300 μm.

The pitch-based graphitized short fibers of the invention contain graphite crystals and have a crystallite size (La) derived from the growth direction of the hexagonal net plane of 30 nm or more. The crystallite size derived from the growth direction of the hexagonal net plane is necessarily a certain size or larger for exhibiting the thermal property. The crystallite size derived from the growth direction of the hexagonal net plane can be obtained by an X-ray diffraction method. The measurement method is preferably a concentration technique, and the analysis method is preferably an XRD Gakushin method. The crystallite size derived from the growth direction of the hexagonal net plane can be obtained with the diffraction line from the (110) plane. The crystallite size derived from the growth direction of the hexagonal net plane is preferably 70 nm or more, and more preferably 110 nm or more.

In the pitch-based graphitized short fibers of the invention, the end surfaces of the graphene sheets are closed upon observation of the end surface of the fibers with a transmission electron microscope. In the case where the end surfaces of the graphene sheets are closed, formation of unnecessary functional groups and localization of electrons owing to the shape are prevented from occurring. Accordingly, the pitch-based graphitized short fibers are free of active points, and upon kneading with a thermosetting resin, such as a silicone resin and an epoxy resin, curing due to decrease of the catalyst active points can be prevented. Furthermore, adsorption of water is also prevented, and for example, upon kneading with a resin associated with hydrolysis, such as polyester, considerable enhancement in hygrothermal durability can be provided. In the view field of a transmission electron microscope with a magnitude of 500,000 to 4,000,000, 80% of the end surfaces of the graphene sheets are preferably closed. When it is 80% or less, formation of unnecessary functional groups and localization of electrons owing to the shape unfavorably occur to cause a possibility acceleration of reaction with other materials. The closing ratio of the end surfaces of the graphene sheets is preferably 900 or more, and more preferably 95% or more.

The closing ratio is expressed by the ratio of the length (nm) of the portion where the end surfaces of the graphene sheets at the ends of fibers are bent in a U-shape with respect to the total length (nm) of the end surfaces of the graphene sheets.

$$\texttt{closing ratio (\%) = B/A} \times \texttt{100}$$

wherein A represents the total length (nm) of the end surfaces of the graphene sheets at end of the fibers, and B represents the length (nm) of the portion where the end surfaces are bend in a U-shape. Fig. 1 shows a schematic view of the ends of the pitch-based graphitized short fibers. The symbol A shows the total length of the end surfaces of the graphene sheets at the ends of fibers, and B shows the length of the portion where the end surfaces are bent in a U-shape, i.e., the length except for the portion where the end surfaces are opened but not bent in a U-shape.

The structure of the end surfaces of the graphene sheets varies greatly depending on as to whether pulverization is performed before graphitization or after graphitization. Specifically, in the case where the pulverization is performed after the graphitization, the graphene sheets grown through the graphitization are cut and broken, and thus the end surfaces of the graphene sheets are liable to be opened. In the case where the pulverization is performed before the graphitization, the end surfaces of the graphene sheets are grown into a U-shape through the growing process of graphite, which facilitates formation of the structure where the bent portions are exposed on the ends of the pitch-based graphitized short fibers. Accordingly, for providing the pitch-based graphitized short fibers having a closing ratio on the end surfaces of the graphene sheets exceeding 80%, the graphitization is preferably performed after the pulverization.

The pitch-based graphitized short fibers of the invention has a substantially flat surface on observation of the side surface with a scanning electron microscope. The term "substantially flat" herein means that the pitch-based graphitized short fibers do not have severe irregularity, such as a fibril structure. In the case where the pitch-based graphitized short fibers have defects like severe irregularity on the surface thereof, the viscosity upon kneading with a matrix resin is increased due to increase of the surface area, which deteriorates the moldability. Accordingly, the defects like surface irregularity are preferably as small as possible. More specifically, the defects like irregularity may be observed at 10 places or less in the view field on observation with a scanning electron microscope with a magnitude of 1,000.

In general, a sizing agent is used in the production process of carbon fibers for handling the fibers as bundles. Examples of the sizing agent used herein include an epoxy compound, a water soluble polyamide compound, saturated polyester, unsaturated polyester, vinyl acetate, an alcohol and a glycol, which may be used solely or as a mixture. In the case where the compound is coated on the surface of the carbon fibers, the R value measured with a laser Raman spectrometer deviates from the range of 0.01 to 0.07, and the $\Delta v_G$ value also exceeds 20, even though the compound is thermally decomposed through a high temperature heat treatment. Accordingly, in the case where a thermal conductive composition having a rubber component as a matrix component is to be provided by using carbon fibers having a compound, such as a sizing agent, coated thereon, curing of the rubber component is unfavorably inhibited considerably due to the component poisoning the catalyst component contained in the vulcanization accelerator eluted from the surface of the carbon fibers.

[Preferred Production Method of Pitch-based Graphitized Short Fibers]

A preferred production method of the pitch-based graphitized short fibers of the invention will be described below.
Examples of the raw material for the pitch-based graphitized short fibers of the invention include a condensed polycyclic hydrocarbon compound, such as naphthalene and phenanthrene, and a condensed heterocyclic compound, such as petroleum pitch and coal pitch. Among these, a condensed polycyclic hydrocarbon compound, such as naphthalene and phenanthrene, are preferred, and mesophase pitch is particularly preferred. The mesophase pitch preferably has a mesophase ratio of 90% or more, more preferably 95% or more, and further preferably 99% or more. The mesophase ratio of the mesophase pitch may be confirmed by observing the pitch in a fused state with a polarizing microscope.
The raw material pitch preferably has a softening point of 230 to 340°C. The infusiblization treatment is performed necessarily at a temperature lower than the softening point. Accordingly, when the softening point is lower than 230°C, the infusiblization treatment is performed necessarily such a low temperature that is lower than the softening point, and as a result, a prolonged period of time is unfavorably required for the infusiblization. When the softening point exceeds 340°C, a high temperature exceeding 340°C is required for spinning, and causes unfavorably problems including thermal decomposition of the pitch and formation of bubbles in the fiber due to the gas generated. The softening point is more preferably in a range of 250 to 320°C, and further preferably 260 to 310°C. The softening point of the raw material pitch may be obtained by a Mettler method. The raw material pitch may be used after combining two or more kinds thereof. The raw material pitches to be combined preferably have a mesophase ratio of 90% or more and a softening point of 230 to 340°C.
The mesophase pitch is spun by a melting method, and then formed into the pitch-based graphitized short fibers through infusiblization, carbonization, pulverization and graphitization. A classification step may be inserted after the pulverization in some cases.
Preferred embodiments for the respective steps will be described below.
The spinning method is not particularly limited, and a so-called melt-spinning method may be applied. Specific examples thereof include a spinning and drawing method of withdrawing mesophase pitch discharged from a nozzle with a winder, a melt-blowing method using hot air as an atomizing air source, and a centrifugal spinning method of withdrawing mesophase pitch by utilizing a centrifugal force. Among these, a melt-blowing method is preferably used in consideration of the control of the state of the pitch-based carbon fiber precursor and the high productivity. Accordingly, the melt-blowing method will be described hereinafter for the production method of the pitch-based graphitized short fibers of the invention.
The spinning nozzle for forming the pitch-based carbon fiber precursor may have any shape. A nozzle having a true circular shape may be generally used, and a nozzle having any atypical shape, such as an elliptic shape, may be used without any problem. The ratio (LN/DN) of the length of the nozzle hole (LN) and the diameter of the hole (DN) is preferably in a range of 2 to 20. When the ratio LN/DN exceeds 20, mesophase pitch passing through the nozzle receives a strong shearing force, and a radial structure appears on the cross section of the fibers. The exhibition of the radial structure may cause cracking on the cross section of the fibers in the process of graphitization, which unfavorably brings about deterioration of the mechanical characteristics. When the ratio LN/DN is less than 2, no shearing force can be applied to the raw material pitch, resulting in a pitch-based carbon fiber precursor having low orientation of graphite. Accordingly, the graphitization degree may not be sufficiently increased upon graphitization, and it is unfavorably difficult to enhance the thermal conductivity. For achieving both the mechanical strength and the thermal conductivity simultaneously, it is necessary to apply a suitable shearing force to the mesophase pitch, and therefor, the ratio (LN/DN) of the length of the nozzle hole (LN) and the diameter of the hole (DN) is preferably in a range of 2 to 20, and particularly preferably in a range of 3 to 12.
The temperature of the nozzle, the shear velocity of the mesophase pitch passing through the nozzle, the amount and temperature of the air blown from the nozzle, and the like, upon spinning are not particularly limited, and conditions capable of maintaining the stable spinning state, i.e., the melt viscosity of the mesophase pitch at the nozzle hole within a range of 3 to 25 Pa·s, may be employed.
In the case where the melt viscosity of the mesophase pitch passing through the nozzle is less than 3 Pa·s, the shape of the fiber may unfavorably not be maintained due to too low the melt viscosity. In the case where the melt viscosity of the mesophase pitch passing through the nozzle exceeds 25 Pa·s, on the other hand, a strong shearing force is applied to the mesophase pitch, and a radial structure is unfavorably formed on the cross section of the fibers. For making the shearing force applied to the mesophase pitch within the suitable range and maintaining the shape of the fibers, it is necessary to control the melt viscosity of the mesophase pitch passing through the nozzle. Accordingly, the melt viscosity of the mesophase pitch is preferably controlled to a range of 3 to 25 Pa·s, more preferably to a range of 5 to 20 Pa·s, and further preferably to a range of 6 to 15 Pa·s.

The pitch-based graphitized short fibers of the invention has an average fiber diameter (D1) of 5 to 20 $\mu$m, and the average fiber diameter of the pitch-based graphitized short fibers can be controlled by changing the hole diameter of the nozzle, by changing the amount of the raw material pitch discharged from the nozzle, or by changing the draft ratio. The draft ratio can be changed by blowing gas heated to 100 to 400°C in an amount of 100 to 20,000 m/min to the vicinity of the atomizing point. The gas to be blown is not particularly limited, and air may be favorably used from the standpoint of cost per performance and safety.

The pitch-based carbon fiber precursor is collected with a belt, such as a metallic mesh, to form a pitch-based carbon fiber precursor web. At this time, the areal weight thereof may be arbitrarily controlled by the belt conveying velocity, and the precursor may be accumulated by such a method as cross lapping, depending on necessity. The areal weight of the pitch-based carbon fiber precursor web is preferably 150 to 1,000 g/m$^2$ in consideration of productivity and process stability.

The pitch-based carbon fiber precursor web thus obtained is subjected to an infusiblization treatment by a known method, thereby providing a pitch-based infusible fiber web. The infusiblization may be performed in an oxidizing atmosphere, such as air, or gas containing air having ozone, nitrogen dioxide, nitrogen, oxygen, iodine or bromine added thereto, and is preferably performed in air in consideration of safety and convenience. The infusiblization may be performed by a batch process or a continuous process, and is preferably performed by a continuous process in consideration of productivity. The infusiblization treatment is achieved by applying a heat treatment at a temperature of 150 to 350°C for a prescribed period of time. The temperature is more preferably in a range of 160 to 340°C. The temperature increasing rate is preferably 1 to 10°C per minute, and in the case of a continuous process, the temperature increasing rate may be attained by passing the web through plural reaction chambers set at arbitrary temperatures sequentially. The temperature increasing rate is more preferably in a range of 3 to 9°C per minute in consideration of productivity, process stability and the like.

For providing favorably the pitch-based graphitized short fibers of the invention, the oxygen attached amount of the pitch-based infusible fiber web is preferably 6.0 to 7.5% by weight.

When the oxygen attached amount of the pitch-based infusible fiber web is in the range, such pitch-based graphitized short fibers are favorably obtained that have an R value, which is a relative intensity ratio ($I_D/I_G$) of an intensity ($I_D$) of an Raman band in the vicinity of 1,360 cm$^{-1}$ to an intensity ($I_G$) of the Raman band in the vicinity of 1,580 cm$^{-1}$, in a range of 0.01 to 0.07.

When the oxygen attached amount of the pitch-based infusible fiber web exceeds 7.5% by weight, the R value exceeds 0.07, and it is thereby difficult to provide favorably the pitch-based graphitized short fibers of the invention. In general, mesophase pitch is a graphitizable material, and the pitch as a raw material is fused within the cross section of the fibers in the course of the infusiblization or the carbonization, thereby proceeding rearrangement of molecules. In the case where the oxygen attached amount of the pitch-based infusible fiber web exceeds 7.5% by weight, however, it is considered that oxygen is attached to the interior of the cross section of the fibers of the pitch-based infusible fiber web, whereby the infusiblization proceeds into the interior of the fibers to prevent the pitch from being fused in the interior of the fibers, and thus the rearrangement of the pitch molecules does not proceed. It is expected that this is the cause for the phenomenon that the graphitization degree of the pitch-based graphitized short fibers finally obtained is lowered when the oxygen attached amount of the pitch-based infusible fiber web exceeds 7.5% by weight.

When the oxygen attached amount of the pitch-based infusible fiber web is less than 6.0% by weight, the surface of the pitch-based infusible fiber web is fused in the subsequent baking step, and thereby the pitch-based infusible fibers are unfavorably fused to each other.

In the invention, the oxygen attached amount of the pitch-based infusible fiber web is more preferably in a range of 6.2 to 7.3% by weight, and more preferably in a range of 6.5 to 7.2% by weight.

The pitch-based infusible fiber web is subjected to a carbonization treatment at a temperature of 600 to 2,000°C in vacuum or in a non-oxidizing atmosphere using an inert gas, such as nitrogen, argon or krypton, thereby forming a pitch-based carbon fiber web. The carbonization treatment is preferably performed under an ordinary pressure in a nitrogen atmosphere in consideration of cost. The carbonization treatment may be performed by a batch process or a continuous process, and is preferably performed by a continuous process in consideration of productivity.

The pitch-based carbon fiber web having been subjected to the carbonization treatment is then subjected to such a treatment as cutting, fragmentation, pulverization or the like, for providing a desired fiber length. A classification treatment may be performed in some cases. While the method for the treatment may be appropriately selected depending on an intended fiber length, a guillotine cutter, a single axis, double axis or multi-axis rotation cutter, and the like are preferably used for cutting, and a hummer type, pin type, ball type, bead type or rod type fragmentizing or pulverizing machine utilizing an impact action, a high-speed rotation fragmentizing or pulverizing machine utilizing an impact action among particles, a roll type, a corn type, a screw type or the like fragmentizing or pulverizing machine utilizing a compression and tearing action are preferably used for fragmentation and pulverization. Plural machines performing both cutting and fragmentation or pulverization may be used in combination for providing an intended fiber length. The processing atmosphere may be either a wet type or a dry type. A vibration sieving type, a centrifugal sieving type, an inertia force type, a filtration type or the like classifying machine is preferably used for the classification treatment. An intended fiber length may be obtained not only by the selection of the machines, but also by controlling the rotation number of the rotor, the rotation blade or the like, the feeding amount, the gap between the blades, the residence time in the system, and the like. In the case where the classification treatment is performed, an intended fiber length may also be obtained by controlling the mesh size of the sieve, or the like.

The pitch-based short carbon fibers thus obtained by the cutting, fragmentation or pulverization treatment, or the classification treatment in addition, are graphitized by heating to 2,300 to 3,400°C, thereby providing finally the pitch-based graphitized short fibers. The temperature for graphitization is preferably 2,800 to 3,200°C. The graphitization may be performed in an Acheson furnace, an electric furnace or the like, and may be performed in vacuum or in a non-oxidizing atmosphere using an inert gas, such as nitrogen, argon or krypton.

The pitch-based graphitized short fibers of the invention are not subjected to a surface treatment or a sizing treatment for enhancing compatibility with a matrix component, for enhancing moldability, and for enhancing a mechanical strength after forming a composite material.

[Composition]

The pitch-based graphitized short fibers of the invention may be mixed with at least one matrix selected from the group consisting of a thermoplastic resin, a thermosetting resin and a rubber component, thereby providing a thermal conductive composition. The mixing ratio upon forming the composition is preferably 10 to 300 parts by weight of the pitch-based graphitized short fibers per 100 parts by weight of the matrix component, and a composition having the graphitized short fibers filled at a high density can be provided as described above. The mixing ratio is more preferably 80 to 150 parts by weight of the pitch-based graphitized short fibers per 100 parts by weight of the matrix component.

Examples of the thermosetting resin include an epoxy series, an acrylic series, a urethane series, a silicone series, a phenol series, an imide series, a thermosetting modified PPE series, a thermosetting PPE series, polybutadiene rubber and a copolymer thereof, acrylic rubber and a copolymer thereof, silicone rubber and a copolymer thereof, and natural rubber, which may be used solely or as a combination of two or more thereof. The composition of the invention does not contain a sizing agent.

[Rubber Component]

The pitch-based graphitized short fibers of the invention do not impair curing of a rubber component and can be filled at a high density, and therefore, the advantages of the invention are further exerted in the case where a rubber component is used as the matrix component. In view of this, the thermal conductive composition of the invention preferably contains a rubber component as the matrix component.

The rubber is not particularly limited, and examples thereof include natural rubber (NR), acrylic rubber, acrylonitrile-butadiene rubber (NBR), isoprene rubber (IR), urethane rubber, ethylene-propylene rubber (EPM), epichlorohydrin rubber, chloroprene rubber (CR), silicone rubber, styrene-butadiene rubber (SBR), butadiene rubber (BR) and butyl rubber (IIR).

The thermal conductive rubber composition of the invention may be produced by mixing a rubber component before vulcanization, the pitch-based graphitized short fibers, a vulcanizing agent and a vulcanization accelerator, and then vulcanizing by heating. In the case of silicone rubber, a liquid A containing a base polymer having a crosslinking agent, a filler and the like added thereto, and a liquid B containing an additive for accelerating crosslinking reaction (such as a catalyst or a vulcanizing agent) may be mixed and heated, thereby producing the rubber.

As a method for evaluating the inhibition of curing of the rubber component, such a method may be employed that the curing time of the rubber component as the base and the curing time of the rubber composition containing the pitch-based graphitized short fibers are compared to each other under the same conditions. In the case where the curing time of the rubber composition is in a range of 1.0 to 1.5 times the curing time of the rubber component as the base, it is evaluated that the composition is cured. In the case where the curing time of the rubber composition exceeds 1.5 times the curing time of the rubber component as the base, it is evaluated that the curing is impaired. The curing time can be measured by using Curelastometer.

The thermal conductive rubber composition of the invention preferably has a content of the pitch-based graphitized short fibers of 10 to 300 parts by weight per 100 parts by weight of the rubber component, as described above. When the content of the pitch-based graphitized short fibers is less than 10 parts by weight, the amount of the thermal conductive material is small, and no thermal conductivity may be expected. When the content of the pitch-based graphitized short fibers exceeds 300 parts by weight, it may be difficult to disperse the pitch-based graphitized short fibers in the resin, and to provide a uniform composition as the thermal conductive rubber composition. The content of the pitch-based graphitized short fibers is more preferably 10 to 150 parts by weight per 100 parts by weight of the rubber component. A composition having the pitch-based graphitized short fibers filled at a high density can be provided as described above, and therefore, the advantages of the invention are further exerted when the content of the pitch-based graphitized short fibers is large with respect to the rubber component. The content of the pitch-based graphitized short fibers is further preferably 80 to 150 parts by weight per 100 parts by weight of the rubber component.

[Other Components]

For further enhancing the thermal conductivity of the thermal conductive composition of the invention, an additional filler other than the pitch-based graphitized short fibers may be added thereto depending on necessity. Specific examples thereof include a metal oxide, such as aluminum oxide, magnesium oxide, silicon oxide and zinc oxide, a metal hydroxide, such as aluminum hydroxide and magnesium hydroxide, a metal nitride, such as boron nitride and aluminum nitride, a metal oxynitride, such as aluminum oxynitride, a metal carbide, such as silicon carbide, a metal or an alloy, such as gold, silver, copper, aluminum, metallic silicon and a low melting point alloy, and a carbon material, such as natural graphite, artificial graphite, exfoliated graphite, diamond, a fullerene compound and carbon nanotubes. These materials may be added appropriately corresponding to the functions. Two or more kinds thereof may be used in combination. An additive that may impair the curing is necessarily controlled in the addition amount thereof.

For further enhancing the other capabilities, such as the moldability and the mechanical property, a fibrous filler, such as glass fibers, potassium titanate whiskers, zinc oxide whiskers, aluminum borate whiskers, boron nitride whiskers, aramid fibers, alumina fibers, silicon carbide fibers, asbestos fibers, gypsum fibers and metallic fibers, may be added appropriately corresponding to the functions. Two or more kinds thereof may be used in combination. A silicate salt, such as wollastonite, zeolite, sericite, kaolin, mica, clay, pyrophyllite, bentonite, asbestos, talc and aluminum silicate, a carbonate salt, such as calcium carbonate, magnesium carbonate and dolomite, a sulfate salt, such as calcium sulfate and barium sulfate, and a non-fibrous filler, such as glass beads, glass flakes and ceramic beads, may be added appropriately depending on necessity. They may be hollow, and two or more kinds thereof may be used in combination. These compounds often have a larger density than the pitch-based graphitized short fibers, and the amount and ratio of them added may be controlled when weight saving is intended. In the case where the matrix component is a rubber component, a compound that may impair the curing is necessarily controlled in the addition amount thereof.

Plural other additives may be added to the composition depending on necessity. Examples of the other additives include a releasing agent, a flame retarder, an emulsifier, a softening agent, a plasticizer and a surfactant. In the case where the matrix component is a rubber component, an additive that may impair the curing is necessarily controlled in the addition amount thereof.

[Molded Article]

The thermal conductive composition thus obtained may be processed depending on necessity to form a thermal conductive molded article. The thermal conductive molded article thus formed may be used by mounting on a heating member. The thermal conductive molded article may be molded by a compression molding method, a press molding method, a calender molding method, a roll molding method or an extrusion molding method. A thermal conductive sheet using the thermal conductive molded article may be used. The sheet thus molded can be attached to a heating member on a flat surface. The purposes of the molded article will be described more specifically. The molded article may be used as a heat radiating member, a heat transferring member or a member constituting them, for radiating heat generated from an electronic member, such as a semiconductor device, an electric power source and a light source, of an electric equipment or the like, to the exterior of the equipment effectively.

Example

Examples are shown below, but the invention is not limited to them.

The values in the examples were obtained in the following manners.

(1) Oxygen attached amount to pitch-based infusible fiber web
The oxygen attached amount to the pitch-based infusible fiber web was evaluated with CHNS-O Analyzer (FLASHEA 1112 Series, produced by Thermo ELECTRON CORPORATION).
(2) The average fiber diameter of the pitch-based graphitized short fibers was obtained in such a manner that 60 fibers of the pitch-based graphitized short fibers were measured with a scale under an optical microscope, and the average value thereof was obtained. The CV value was determined as a ratio of the obtained average fiber diameter (Ave) and the variance of the fiber diameter (S) according to the following expression.

$$CV = S \: / \: Ave \times 100$$

wherein $S = \sqrt{((\sum X - Ave)^2 / n)}$, X is the observed value, and n is the observed number.

(3) The number average fiber length of the pitch-based graphitized short fibers was measured in such a manner that 2, 000 fibers (10 view fields for 200 fibers each) were measured with a length measurement device under an optical microscope, and the average value thereof was obtained.

(4) The crystallite size of the pitch-based graphitized short fibers was obtained by measuring reflection from the (110) plane in an X-ray diffraction spectrum according to an XRD Gakushin method.

(5) The relative intensity ratio R ($I_D/I_G$) of the intensity ($I_D$) of the Raman band in the vicinity of 1,360 cm$^{-1}$ to the intensity ($I_G$) of the Raman band in the vicinity of 1,580 cm$^{-1}$ and the half value width $\Delta\nu_G$ value of the Raman band in the vicinity of 1,580 cm$^{-1}$ were measured by using a Raman microspectroscope, Ramanor T-64000, with a Raman microprobe. The light source used was Ar$^+$ laser (514.5 nm).

(6) The end surface of the pitch-based graphitized short fibers was observed with a transmission electron microscope with a magnitude of 1,000,000, and was further enlarged on the photograph to a magnitude of 4,000,000, thereby confirming the graphene sheets.

(7) The surface of the pitch-based graphitized short fibers was observed with a scanning electron microscope with a magnitude of 1,000, thereby confirming the irregularity.

(8) Softening point

The softening point was obtained by increasing the temperature from 260°C at 1°C per minute in a nitrogen atmosphere by using METTLER FP90 (produced by Mettler-Toledo International, Inc.).

(9) The thermal conductivity within the plane of the sheet-shaped thermal conductive molded article was obtained by a probe method by using QTM-500, produced by Kyoto Electric Manufacturing Co., Ltd.

(10) The curing time of the two-component curable silicone rubber was measured by using JSR Curelastometer Model III.

[Example 1]

Mesophase pitch containing condensed polycyclic hydrocarbon compounds was used as a main raw material. The optical anisotropy ratio was 100%, and the softening point was 286°C. A cap with a hole having a diameter of 0.2 mm was used, heated air was blown through a slit at 9,700 m/min, and the molten pitch was withdrawn to produce a pitch-based carbon fiber precursor having an average diameter of 15.5 $\mu$m. At this time, the spinning temperature was 341°C, and the melt viscosity was 9.5 Pa·s (95 poise). The pitch-based carbon fiber precursor thus spun was collected on a belt to form a web, which was then formed by cross lapping into a pitch-based carbon fiber precursor web containing the pitch-based carbon fiber precursor having an areal weight of 380 g/m$^2$.

The pitch-based carbon fiber precursor web was infusiblized by increasing the temperature in the air from 170°C to 320°C at an average temperature increasing rate of 7°C per minute. The oxygen attached amount to the pitch-based infusible fiber web at this time was 6.6% by weight. The web was further baked at 800°C to provide a pitch-based carbon fiber web. The web was pulverized with a cutter (produced by Turbo Corporation) at 800 rpm to provide pitch-based short carbon fibers (referred to as short fibers A). The short fibers A were graphitized at 3,000°C to provide pitch-based graphitized short fibers (referred to as short fibers B).

The pitch-based graphitized short fibers (short fibers B) had an average fiber diameter of 10.1 $\mu$m and a coefficient of variation of the fiber diameter with respect to the average fiber diameter (CV value) of 10%. The measurement with a Raman microspectroscope revealed that the R value was 0.040 and the $\Delta\nu_G$ value was 17.8 cm$^{-1}$.

The number average fiber length was 150 $\mu$m, and the crystallite size derived from the growth direction of the hexagonal net plane was 115 nm. The observation with a transmission electron microscope confirmed that the graphene sheets were closed on the end surface of the pitch-based graphitized short fibers, and the closing ratio was 95%. The observation with a scanning electron microscope revealed that one irregularity was found, which meant that the surface was substantially flat.

15 parts by weight of the pitch-based graphitized short fibers (short fibers B) and 85 parts by weight of a polycarbonate resin (L-1225, produced by Teijin Chemicals, Ltd.) were dry-blended and melt-kneaded with a single axis extruder, and formed into strand chips. The resulting strand chips were dried at 110°C for 5 hours. Subsequently, a test piece for evaluation was produced by injection molding at a cylinder temperature of 300°Candamold temperature of 70°C. The bending modulus of the test piece measured was 17.8 GPa.

[Example 2]

15 parts by weight of the pitch-based graphitized short fibers (short fibers B) obtained in Example 1 and 100 parts by weight of polyether-modified polydimethylsiloxane ("BYK-302", a trade name, produced by BYK Chemie Co., Ltd.) were mixed with a rotary and revolutionary mixer ("Awatori Rentaro (Thinky Mixer) ARV310", a trade name, produced by Thinky Corporation) for 6 minutes to provide a rubber composition. The composition was treated at 80°C, and was cured after lapsing 70 minutes. The curing time of BYK-302 at 80°C was 70 minutes. Accordingly, the curing time of the thermal conductive rubber composition was 1.0 time the curing time of the rubber composition.

The resulting rubber composition was pressed with a vacuum pressing machine (produced by Kitagawa Seiki Co., Ltd.) to provide a composite molded article in a plate shape having a thickness of 0. 5 mm, which was then cured at 130°C for 2 hours to provide a sheet-shaped thermal conductive molded article. The sheet-shaped molded article had a thermal conductivity of 11.3 W/m·K.

[Comparative Example 1]

Pitch-based graphitized short fibers (short fibers B') were obtained in the same manner as in Example 1 except that the infusiblization was performed by increasing the temperature from 170°C to 320°C at an average temperature increasing rate of 2°C per minute. The oxygen attached amount to the pitch-based infusible fiber web at this time was 9.2% by weight. The measurement of the pitch-based graphitized short carbon fibers with a Raman microspectroscope revealed that the R value was 0. 183 and the $\Delta v_G$ value was 25.1 cm$^{-1}$. The observation of the end surface of the pitch-based graphitized short fibers with a transmission electron microscope confirmed that the graphene sheets were closed, and the closing ratio was 92%. The observation of the surface with a scanning electron microscope revealed that one irregularity was found, which meant that the surface was substantially flat. A test piece was produced in the same manner as in Example 1 except that the pitch-based graphitized short fibers (short fibers B') were used. The bending modulus of the test piece measured was 10.3 GPa.

[Comparative Example 2]

Pitch-based short carbon fibers (short fibers A) were obtained in the same manner as in Example 1, i.e., baking was performed at 800°C, and then pulverization was performed. The measurement of the pitch-based short carbon fibers with a Raman microspectroscope revealed that the R value was 0.668 and the $\Delta v_G$ value was 62.1 cm$^{-1}$. The observation of the end surface of the short carbon fibers with a transmission electron microscope did not reveal an apparent graphite structure, the ends thereof were opened, and the closing ratio was 0%. A test piece was produced in the same manner as in Example 1 except that the pitch-based short carbon fibers (short fibers A) were used. The bending modulus of the test piece measured was 3.8 GPa.

[Example 3]

Mesophase pitch containing condensed polycyclic hydrocarbon compounds was used as a main raw material. The optical anisotropy ratio was 100%, and the softening point was 283°C. A cap with a hole having a diameter of 0.2 mm was used, heated air was blown through a slit at 8,500 m/min, and the molten pitch was withdrawn to produce a pitch-based carbon fiber precursor having an average diameter of 14.5 $\mu$m. At this time, the spinning temperature was 335°C, and the melt viscosity was 10.5 Pa·s (105 poise). The pitch-based carbon fiber precursor thus spun was collected on a belt to form a web, which was then formed by cross lapping into a pitch-based carbon fiber precursor web containing the pitch-based carbon fiber precursor having an areal weight of 400 g/m$^2$.

The pitch-based carbon fiber precursor web was infusiblized by increasing the temperature in the air from 170°C to 320°C at an average temperature increasing rate of 6°C per minute. The oxygen attached amount to the pitch-based infusible fiber web at this time was 6.5% by weight. The web was further baked at 800°C to provide a pitch-based carbon fiber web. The web was pulverized with a cutter (produced by Turbo Corporation) at 800 rpm to provide pitch-based short carbon fibers (referred to as short fibers C). The short fibers C were graphitized at 3,000°C to provide pitch-based graphitized short fibers (referred to as short fibers D).

The pitch-based graphitized short fibers had an average fiber diameter of 9.8 $\mu$m and a coefficient of variation of the fiber diameter with respect to the average fiber diameter (CV value) of 10%. The measurement with a Raman microspectroscope revealed that the R value was 0.041 and the $\Delta v_G$ value was 18.1 cm$^{-1}$ The number average fiber length was 150 $\mu$m, and the crystallite size derived from the growth direction of the hexagonal net plane was 70 nm. The observation with a transmission electron microscope confirmed that the graphene sheets were closed on the end surface of the pitch-based graphitized short fibers, and the closing ratio was 96%. The observation with a scanning electron microscope revealed that one irregularity was found, which meant that the surface was substantially flat.

100 parts by weight of the pitch-based graphitized short fibers and 100 parts by weight of two-component curable silicone rubber ("SE1821", a trade name, produced by Dow Corning Toray Silicone Co., Ltd.) were mixed with a rotary and revolutionary mixer ("Awatori Rentaro (Thinky Mixer) ARV310", a trade name, produced by Thinky Corporation) for 6 minutes to provide a thermal conductive rubber composition. The composition was treated at 80°C, and was cured after lapsing 60 minutes. The curing time of SE1821 at 80°C was 60 minutes. Accordingly, the curing time of the thermal conductive rubber composition was 1.0 time the curing time of the rubber composition.

The resulting thermal conductive rubber composition was pressed with a vacuum pressing machine (produced by Kitagawa Seiki Co., Ltd.) to provide a composite molded article in a plate shape having a thickness of 0.5 mm, which was then cured at 130°C for 2 hours to provide a sheet-shaped thermal conductive molded article. The sheet-shaped molded article had a thermal conductivity of 12.5 W/m·K.

[Comparative Example 3]

Pitch-based short carbon fibers (short fibers C) were obtained in the same manner as in Example 3, i.e., baking was performed at 800°C, and then pulverization was performed. The measurement of the pitch-based short carbon fibers with a Raman microspectroscope revealed that the R value was 0.668 and the $\Delta v_G$ value was 62.1 cm$^{-1}$. The observation of the end surface of the short carbon fibers with a transmission electron microscope did not reveal an apparent graphite structure, the ends thereof were opened, and the closing ratio was 0%. One hundred parts by weight of the pitch-based short carbon fibers and 100 parts by weight of two-component curable silicone rubber ("SE1821", a trade name, produced by Dow Corning Toray Silicone Co., Ltd.) were mixed with a rotary and revolutionary mixer ("Awatori Rentaro (Thinky Mixer) ARV310", a trade name, produced by Thinky Corporation) for 6 minutes to provide a thermal conductive rubber composition. The composition was treated at 80°C, but was not cured even after lapsing 120 minutes.

[Comparative Example 4]

Pitch-based graphitized short fibers (short fibers D) were obtained in the same manner as in Example 3, and 3 parts by weight of an epoxy sizing agent was added to 100 parts by weight of the resulting pitch-based graphitized short fibers. The measurement of the pitch-based graphitized short fibers having been treated with the sizing agent with a Raman microspectroscope revealed that the R value was 0.205 and the $\Delta v_G$ value was 36.8 cm$^{-1}$. 100 parts by weight of the pitch-based graphitized short fibers having been treated with the sizing agent and 100 parts by weight of two-component curable silicone rubber ("SE1821", a trade name, produced by Dow Corning Toray Silicone Co., Ltd.) were mixed with a rotary and revolutionary mixer ("Awatori Rentaro (Thinky Mixer) ARV310", a trade name, produced by Thinky Corporation) for 6 minutes to provide a thermal conductive rubber composition. The composition was treated at 80°C, but was not cured even after lapsing 120 minutes.

[Comparative Example 5]

Pitch-based graphitized short fibers (short fibers D') were obtained in the same manner as in Example 3 except that the infusiblization was performed by increasing the temperature from 170°C to 320°C at an average temperature increasing rate of 2°C per minute. The oxygen attached amount to the pitch-based infusible fiber web at this time was 9.2% by weight. The measurement of the pitch-based graphitized short fibers with a Raman microspectroscope revealed that the R value was 0.183 and the $\Delta v_G$ value was 25.1 cm$^{-1}$. The observation of the end surface of the pitch-based graphitized short fibers with a transmission electron microscope confirmed that the graphene sheets were closed, and the closing ratio was 92%. The observation of the surface with a scanning electron microscope revealed that one irregularity was found, which meant that the surface was substantially flat. One hundred parts by weight of the pitch-based graphitized short fibers and 100 parts by weight of two-component curable silicone rubber ("SE1821", a trade name, produced by Dow Corning Toray Silicone Co., Ltd.) were mixed with a rotary and revolutionary mixer ("Awatori Rentaro (Thinky Mixer) ARV310", a trade name, produced by Thinky Corporation) for 6 minutes to provide a thermal conductive rubber composition. The composition was treated at 80°C, but was not cured even after lapsing 120 minutes.

[Comparative Example 6]

100 parts by weight of carbon fibers (DIALEAD, grade K233HG), produced by Mitsubishi Chemical Sanshi Co., Ltd. were baked at 3,000°C. The measurement of the carbon fibers baked at 3,000°C with a Raman microspectroscope revealed that the R value was 0.162 and the $\Delta v_G$ value was 22.1 cm$^{-1}$. The observation of the end surface of the carbon fibers with a transmission electron microscope revealed that the graphene sheets were opened, and the closing ratio was 9%. The observation of the surface with a scanning electron microscope revealed that no irregularity was found, which meant that the surface was substantially flat. 100 parts by weight of the carbon fibers baked at 3,000°C and 100 parts by weight of two-component curable silicone rubber ("SE1821", a trade name, produced by Dow Corning Toray Silicone Co., Ltd.) were mixed with a rotary and revolutionary mixer ("Awatori Rentaro (Thinky Mixer) ARV310", a trade name, produced by Thinky Corporation) for 6 minutes to provide a thermal conductive rubber composition. The composition was treated at 80°C, and was cured after lapsing 120 minutes. The curing time of SE1821 at 80°C was 60 minutes. Accordingly, the curing time of the thermal conductive rubber composition was 2.0 times the curing time of the rubber composition.

[Comparative Example 7]

The measurement of carbon fibers (GRANOC, XN-100), produced by Nippon Graphite Fiber Corporation, with a Raman microspectroscope revealed that the R value was 0.182 and the $\Delta\nu_G$ value was 24.1 cm$^{-1}$. The observation of the end surface of the carbon fibers with a transmission electron microscope revealed that the graphene sheets were opened, and the closing ratio was 0%. The observation of the surface with a scanning electron microscope revealed that four irregularities were found, which meant that the surface was substantially flat.

One hundred parts by weight of the carbon fibers and 100 parts by weight of two-component curable silicone rubber ("SE1821", a trade name, produced by Dow Corning Toray Silicone Co., Ltd.) were mixed with a rotary and revolutionary mixer ("Awatori Rentaro (Thinky Mixer) ARV310", a trade name, produced by Thinky Corporation) for 6 minutes to provide a thermal conductive rubber composition. The composition was treated at 80°C, and was cured after lapsing 100 minutes. The curing time of SE1821 at 80°C was 60 minutes. Accordingly, the curing time of the thermal conductive rubber composition was 1.7 times the curing time of the rubber composition.

Description of Symbols

A total length of end surfaces of graphene sheets at ends of fibers
B length of a portion where end surfaces are bent in U-shape

**Claims**

1. Pitch-based graphitized short fibers formed from mesophase pitch as a raw material, having an average fiber diameter of 5 to 20 $\mu$m, a percentage (CV value) of a variance of a fiber diameter with respect to the average fiber diameter of 8 to 15%, a number average fiber length of 20 to 500 $\mu$m, and a crystallite size (La) derived from a growth direction of a hexagonal net plane of 30 nm or more, having graphene sheets that are closed upon observation of an end surface of a filler with a transmission electron microscope, and a substantially flat surface observed with a scanning electron microscope, and having an R value, which is a relative intensity ratio ($I_D/I_G$) of an intensity ($I_D$) of a Raman band in the vicinity of 1,360 cm$^{-1}$ to an intensity ($I_G$) of a Raman band in the vicinity of 1,580 cm$^{-1}$ measured by laser Raman spectroscopy, in a range of 0.01 to 0.07.

2. The pitch-based graphitized short fibers according to claim 1, wherein the pitch-based graphitized short fibers have a $\Delta\nu G$ value, which is a half value width of a Raman band in the vicinity of 1,580 cm$^{-1}$ measured by laser Raman spectroscopy, of less than 20 (cm$^{-1}$).

3. A thermal conductive composition comprising the pitch-based graphitized short fibers according to claim 1, and at least one matrix component selected from the group consisting of a thermoplastic resin, a thermosetting resin and a rubber component.

4. The thermal conductive composition according to claim 3, which contains 10 to 300 parts by weight of the pitch-based graphitized short fibers per 100 parts by weight of the matrix component.

5. The thermal conductive composition according to claim 3, wherein the matrix component is a rubber component.

6. The thermal conductive composition according to claim 5, wherein the thermal conductive composition has a curing time that is 1.0 to 1.5 times a curing time of the rubber component.

7. The thermal conductive composition according to claim 5, wherein the rubber component is at least one selected from the group consisting of natural rubber (NR), acrylic rubber, acrylonitrile-butadiene rubber (NBR), isoprene rubber (IR), urethane rubber, ethylene-propylene rubber (EPM), epichlorohydrin rubber, chloroprene rubber (CR), silicone rubber, styrene-butadiene rubber (SBR), butadiene rubber (BR) and butyl rubber (IIR).

**8.** A thermal conductive molded article comprising the thermal conductive composition according to claim 3.

**9.** A thermal conductive sheet comprising the thermal conductive molded article according to claim 8.

**10.** A method for producing the pitch-based graphitized short fibers according to claim 1, comprising (1) a step of producing a pitch-based carbon fiber precursor web from mesophase pitch by a melt-blowing method, (2) a step of producing a pitch-based infusible fiber web having an oxygen attached amount of 6.0 to 7.5% by weight by infusiblizing the pitch-based carbon fiber precursor web in an oxidizing gas atmosphere, (3) a step of producing a pitch-based carbon fiber web by baking the infusible fiber web at 600 to 2,000°C, (4) a step of producing pitch-based short carbon fibers by pulverizing the pitch-based carbon fiber web, and (5) a step of baking the pitch-based short carbon fibers at 2,300 to 3,400°C.

[Fig. 1]

## INTERNATIONAL SEARCH REPORT

International application No.

PCT/JP2010/051048

A. CLASSIFICATION OF SUBJECT MATTER
*D01F9/145(2006.01)i, D04H3/00(2006.01)i, D04H3/16(2006.01)i*

According to International Patent Classification (IPC) or to both national classification and IPC

B. FIELDS SEARCHED

Minimum documentation searched (classification system followed by classification symbols)
D04H1/00-18/00, D01F9/08-9/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2008-248462 A (Teijin Ltd.),<br>16 October 2008 (16.10.2008),<br>claims 1, 2, 4; paragraph [0026]; examples<br>& EP 2128313 A1 | 1-4,8-10<br>5-7 |
| Y | JP 2006-298946 A (Bridgestone Corp.),<br>02 November 2006 (02.11.2006),<br>paragraph [0016]<br>(Family: none) | 5-7 |

☐ Further documents are listed in the continuation of Box C.    ☐ See patent family annex.

| | |
|---|---|
| *   Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| | |
|---|---|
| Date of the actual completion of the international search<br>17 February, 2010 (17.02.10) | Date of mailing of the international search report<br>02 March, 2010 (02.03.10) |
| Name and mailing address of the ISA/<br>Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006298946 A